# EUROPÄISCHE PATENTSCHRIFT

(11) **EP 2 537 736 B1**
(45) Veröffentlichungstag und Bekanntmachung des Hinweises auf die Patenterteilung: **18.02.2015**
(21) Anmeldenummer: 12004461.5
(22) Anmeldetag: 13.06.2012
(51) Int. Cl.: B62D 35/00

(54) **Luftleiteinrichtung für ein Kraftfahrzeug**
Air deflecter for a motor vehicle
Dispositif de guidage d'air pour véhicule automobile

(30) Priorität: 22.06.2011 DE 102011105357
(43) Veröffentlichungstag der Anmeldung: 26.12.2012
(73) Patentinhaber: Audi AG, 85045 Ingolstadt (DE)
(72) Erfinder: Bartols, Jan, 85049 Ingolstadt (DE)
(74) Vertreter: Mader, Wilfried

(56) Entgegenhaltungen:
- DE-A1-102004 030 571
- DE-A1-102007 061 257
- FR-A1- 2 816 906
- FR-A1- 2 874 579

## Beschreibung

Die Erfindung betrifft eine Luftleitvorrichtung für ein Kraftfahrzeug nach dem Oberbegriff des Patentanspruches 1.

Um während der Fahrt eine auf die Hinterachse des Kraftfahrzeuges wirkende Abtriebskraft zu erhöhen, sind heckseitige Luftleitelemente bekannt. Diese weisen typischerweise ein Flügelprofil auf, deren Ober- und Unterseiten jeweils an einer vorderen Anströmkante und einer Hinterkante zusammenlaufen. Zur Steigerung der während der Fahrt generierten Abtriebskraft kann die Hinterkante des Flügelprofils als eine nach oben angestellte Abrisskante ausgestaltet sein.

Ein derartiges gattungsgemäße Luftleitelement ist beispielhaft aus der DE 10 2004 004 360 A1 bekannt. Dieses weist ein Flügelprofil mit einer schräg nach oben abgestellten hinteren Abrisskante auf. Der Heckflügel kann in Abhängigkeit von der Fahrzeuggeschwindigkeit zwischen einer Ablagestellung, in der der Heckflügel in einer karosserieseitigen Aufnahmemulde eingelassen ist, und einer Betriebsstellung verlagert werden. In der Betriebsstellung ist zwischen dem Heckflügel und der darunterliegenden Karosserie ein Strömungsspalt gebildet, der während der Fahrt luftdurchströmt ist, um die gewünschte Abtriebswirkung auf die Fahrzeughinterachse zu erzielen.

Um die gewünschten aerodynamischen Wirkungen zu erreichen, weist der aus der DE 10 2004 004 360 A1 bekannte Heckflügel zusammen mit den darunter liegenden Heckspoiler insgesamt eine komplexe Geometrie auf, die die Fahrzeugkonturlinie im Heckbereich stark prägt und einem glatten Konturverlauf im Heckbereich entgegensteht.

Aus der DE 10 2006 058 561 A1 ist ein weiterer Heckspoiler bekannt, der zwischen einer Ruhelage und einer Betriebslage fahrzeuggeschwindigkeitsabhängig verstellbar ist. Beim Verstellen in die Betriebslage werden seitliche Spoilerelemente in der Fahrzeugquerrichtung seitlich nach außen ausgehend von einem mittleren Basis-Spoilerelement nach außen geschwenkt.

Ein weiteres Luftleitelement ist aus der FR 2874579 bekannt.

Die Aufgabe der Erfindung besteht darin, eine Luftleitvorrichtung bereitzustellen, mit der bei abgestelltem oder langsam fahrendem Fahrzeug ein glatter Konturverlauf im Heckbereich bereitgestellt ist, ohne dass Luftleitelemente einem solchen glatten Konturverlauf im Heckbereich entgegenstehen.

Die Aufgabe ist durch die Merkmale des Patentanspruches 1 gelöst. Bevorzugte Weiterbildungen der Erfindung sind in den Unteransprüchen offenbart.

Die Erfindung beruht auf der Erkenntnis, dass im oben genannten Stand der Technik der Heckflügel nicht nur in der ausgefahrenen Betriebsstellung, sondern auch in der eingefahrenen Ablagestellung noch wesentlich das Erscheinungsbild des Fahrzeughecks beeinflusst. Vor diesem Hintergrund ist gemäß dem kennzeichnenden Teil des Patentanspruches 1 die in der Fahrzeuglängsrichtung nach hinten am Flügelprofil anschließende Abrisskante nicht mehr ortsfest am Flügelprofil angeformt, sondern ist vielmehr die Abrisskante mit Hilfe eines Stellelementes gegenüber dem Heckflügel zwischen einer eingefahrenen Stellung und einer ausgefahrenen Stellung verstellbar. In ihrer ausgefahrenen Stellung steigert die Abrisskante die Abtriebskraft auf die Hinterachse, ohne den CW-Wert des Fahrzeuges negativ zu beeinflussen. In der eingefahrenen Stellung kann demgegenüber die Abrisskante weitgehend sichtgeschützt angeordnet sein, ohne die heckseitige Fahrzeugkontur zu beeinflussen.

Dabei kann die Abrisskante unabhängig davon ein- oder ausgefahren werden, ob sich der Heckflügel in der Betriebsstellung oder in der Ablagestellung befindet.

Gemäß einer technischen Realisierung kann die Abrisskante eine freie Oberkante einer in der Fahrzeugquerrichtung verlaufenden Leiste sein. Diese Abrisskanten-Leiste kann zwischen der eingefahrenen und ausgefahrenen Stellung verlagert werden. Sowohl der Heckflügel als auch das Stellelement der Abrisskante können mit an sich bekannten elektrischen Verstelleinheiten angesteuert werden. Die hierzu erforderliche Verstellmechanik mit den zugehörigen Schwenklenkern ist vorliegend nicht Gegenstand der Erfindung und daher aus Gründen der Übersichtlichkeit nicht näher beschrieben.

Zur Steigerung der aerodynamischen Wirkung des Heckflügels kann die Abrisskante in ihrer ausgefahrenen Stellung ausgehend von der Heckflügel-Hinterkante schräg nach hinten oben abgestellt sein. Die Abrisskanten-Leiste schließt sich bevorzugt im Wesentlichen fugenfrei an die Heckflügel-Hinterkante an, damit am Übergang zwischen der Heckflügel-Hinterkante und der Abrisskante kein Strömungsabriss entsteht. Dabei kann die Abrisskanten-Leiste an einem, der freien Oberkante gegenüberliegenden Eckbereich in das Stellelement übergehen. Das Stellelement kann bevorzugt unmittelbar am Heckflügel, insbesondere an dessen Unterseite, verstellbar gelagert sein. Als besonders bauraumgünstig hat es sich erwiesen, das Stellelement der Abrisskante schwenkbar an der Unterseite des Heckflügels anzulenken und über eine geeignete Verstelleinheit anzusteuern. In diesem Fall kann das Stellelement und die Abrisskanten-Leiste im Profil in etwa L-förmig ausgebildet sein, wobei der Eckbereich zwischen der Abrisskanten-Leiste und dem Stellelement bei ausgefahrener Abrisskanten-Stellung die Heckflügel-Hinterkante formschlüssig einfassen kann.

Bevorzugt kann der Heckflügel bei abgestelltem Fahrzeug oder bei geringen Fahrzeuggeschwindigkeiten in der Ablagestellung strakbündig angeordnet sein, so dass die Oberseite des Heckflügels der Außenkonturlinie des Fahrzeughecks flächenbündig, das heißt mit stufenlosem Übergang, angepasst ist. Bevorzugt ist dabei die Heckflügel-Vorderkante sowie die Heckflügel-Hinterkante im Wesentlichen auf gleicher Höhe wie die benachbarten Randkanten der karosserieseitigen Aufnahmemulde.

Besonders bevorzugt ist dabei eine Betätigung der Abrisskante in der Heckflügel-Ablagestellung. Hierzu ist es von Vorteil, wenn in der Heckflügel-Ablagestellung zwischen der Heckflügel-Hinterkante und der hinteren Randkante der Aufnahmemulde ein Durchtrittsspalt gebildet ist, durch den die Abrisskante geführt werden kann. Um eine betriebssichere Betätigung der Abrisskante in der Heckflügel-Ablagestellung zu gewährleisten, ist es zudem von Vorteil, wenn das Stellelement der Abrisskante auch in der Heckflügel-Ablagestellung frei bewegbar ist. Hierzu kann in der Heckflügel-Ablagestellung zwischen der Heckflügel-Unterseite und einem Boden der Aufnahmemulde ein freier Bewegungsraum ausgebildet sein, innerhalb dem das Stellelement der Abrisskante verstellbar ist.

Das Stellelement der Abrisskante ist bevorzugt in seinem freien Ende in einer buchsenförmigen Aufnahmekontur an der Unterseite des Flügelprofils schwenkbar angelenkt. Das Stellelement kann dabei bevorzugt unabhängig vom Heckflügel mit einer Verstelleinheit zwischen seinen beiden Endstellungen betätigt werden.

Besonders bevorzugt ist bei geparktem Fahrzeug und/oder bei geringer Fahrzeuggeschwindigkeit der Heckflügel zusammen mit der verstellbaren Abrisskante strakbündig in der Aufnahmemulde der heckseitigen Karosserie eingelassen. Bei Geschwindigkeiten unterhalb einer vorgegebenen Grenzgeschwindigkeit von beispielsweise 100km/h kann in einer ersten Stufe die Abrisskante in ihre ausgefahrene Stellung verlagert werden. Der Heckflügel selbst bleibt dagegen in dieser ersten Stufe noch ortsfest in seiner Ablagestellung. In einer folgenden zweiten Stufe kann bei Geschwindigkeiten oberhalb einer vorgegebenen Grenzgeschwindigkeit der Heckflügel zusammen mit der, sich bereits in der ausgefahrenen Stellung befindlichen Abrisskante in die Betriebsstellung verstellt werden. In der Betriebsstellung wird ein Strömungsspalt zwischen dem Heckflügel und der darunterliegenden Fahrzeugkarosserie durchströmt wird, um die Abtriebskraft zu generieren. Gleichzeitig kann in der Heckflügel-Betriebsstellung die Abrisskante in ihrer ausgefahrenen Position sein.

Die vorstehend erläuterten und/oder in den Unteransprüchen wiedergegebenen vorteilhaften Aus- und/oder Weiterbildungen der Erfindung - können außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einem vergrößerten Längsteilschnitt den Heckbereich eines Kraftfahrzeuges mit einem Heckflügel, der in einer Ablagestellung in einer karosserieseitigen Aufnahmemulde eingelassen ist;
- Fig. 2: in einer Ansicht entsprechend der Fig. 1 den Heckflügel noch in seiner Ablagestellung sowie mit einer gegenüber dem Heckflügel ausgefahrenen Abrisskante; und
- Fig. 3: in einer Ansicht entsprechend der Fig. 1 den Heckflügel in einer Betriebsstellung.

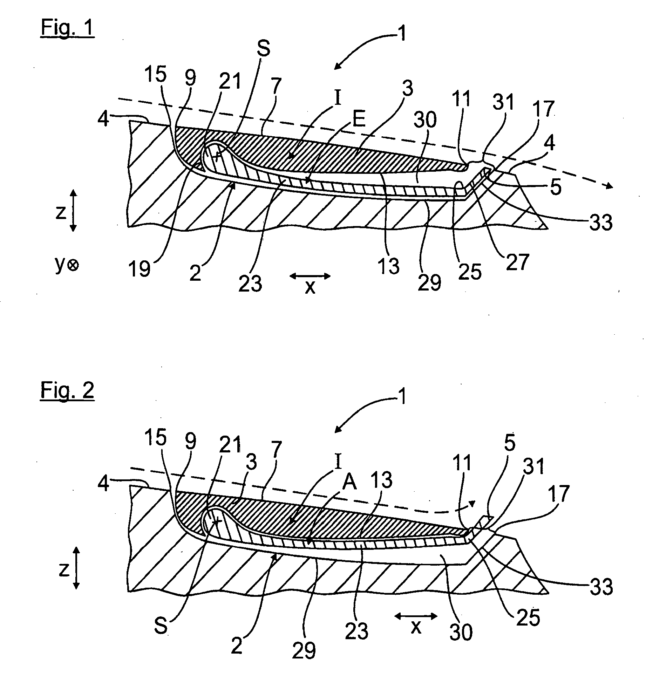

In der Fig. 1 ist grob schematisch ein Heckbereich 1 eines Kraftfahrzeuges dargestellt, in dem in einer karosserieseitigen Aufnahmemulde 2 ein Heckflügel 3 eingelassen ist. Der Heckflügel 3 kann zusammen mit einer später beschriebenen Abrisskante 5 mittels einer nicht näher erläuterten Steuereinheit angesteuert werden, und ausgehend von der in der Fig. 1 gezeigten Ablagestellung I in Abhängigkeit von vorgegebenen und/oder gemessenen Parametern verstellt werden.

Der Heckflügel 3 weist im Profil eine, in der Fig. 1 strakbündig mit der Außenkonturlinie des Fahrzeuges verlaufende Oberseite 7 auf, die an einer Vorderkante 9 und an einer Hinterkante 11 in eine Unterseite 13 übergeht. Für einen stufenlosen Übergang sind die Vorder- und Hinterkanten 9, 11 des Heckflügels 3 flächenbündig mit den benachbarten Randkanten 15, 17 der Aufnahmemulde 2 ausgerichtet. Zudem ist auch die Oberseite 7 des Heckflügels 3 der angrenzenden Fahrzeugkontur 4 formangepasst.

An der Heckflügel-Unterseite 13 ist gemäß der Fig. 1 im Bereich der Vorderkante 9 eine buchsenförmige Aufnahmekontur 19 vorgesehen, in der ein freies Ende 21 eines Stellelementes 23 um eine Schwenkachse S schwenkbar gelagert ist. Das plattenförmige Stellelement 23 geht in der Fig. 1 an seinem rechten Ende an einem Eckbereich 25 in eine ebenfalls querverlaufende, schräg angestellte Leiste 27 über, deren freie Oberkante die bereits erwähnte Abrisskante 5 bildet. Das Stellelement 23 der Abrisskante 5 ist, wie auch der Heckflügel 3 mit einer nicht dargestellten Verstellmechanik gekoppelt, mit der in Abhängigkeit unterschiedlicher Fahrparameter der Heckflügel 3 und/oder die Abrisskante 5 verstellbar ist. In der Fig. 1 ist zwischen der Unterseite 13 des Heckflügels 3 und dem Boden 29 der Aufnahmemulde 2 ein freier, keilförmiger Bewegungsraum 30 vorgesehen. Der Boden 29 der Aufnahmemulde 2 sowie die Heckflügel-Unterseite 13 bilden jeweils Bewegungsanschläge, die die Endstellungen der Abrisskante 5 definieren.

Wie aus der Fig. 1 weiter hervorgeht, ist zwischen der Hinterkante 11 und der hinteren Randkante 17 der karosserieseitigen Aufnahmemulde 2 ein freier Durchtrittsspalt 31 vorgesehen, der den oben erwähnten, keilförmigen Bewegungsraum 30 nach außen öffnet. In der Fig. 1 ist das Stellelement 23 mit der davon abgewinkelten Abrisskanten-Leiste 27 in Anlage mit dem Boden 29 sowie einer schräg nach hinten hochgezogenen Seitenwand 33 der Aufnahmemulde 2 gezeigt. Die Abrisskante 5 ist dabei in der Fig. 1 flächenbündig ausgerichtet zur benachbarten karosserieseitigen Randkante 17 und zur Hinterkante 11 des Heckflügels 3.

Bei Fahrzeuggeschwindigkeiten im Bereich unter 100km/h wird das Stellelement 23 der Abrisskante 5 in die, in der Fig. 2 gezeigten ausgefahrenen Stellung A verlagert. In der ausgefahrenen Stellung A ist die Hinterkante 11 des Heckflügels 3 von dem Eckbereich 25 am Übergang zwischen dem Stellelement 23 und der Abrisskanten-Leiste 27 formschlüssig eingefasst. Die Abrisskante 5 ist somit in der Vertikalrichtung z schräg nach oben aus dem Durchtrittsspalt 31 herausgeführt, um während der Fahrt eine Abtriebswirkung auf die Fahrzeug-Hinterachse bereitzustellen. Der Heckflügel 3 ist in der Fig. 2 jedoch nach wie vor in seiner Ablagestellung I positioniert. Mittels der in der Fig. 2 hochgestellten Abrisskante 5 ist somit der CW-Wert des Fahrzeugs verbessert, und zwar bei gleichzeitiger Abtriebswirkung auf die Hinterachse.

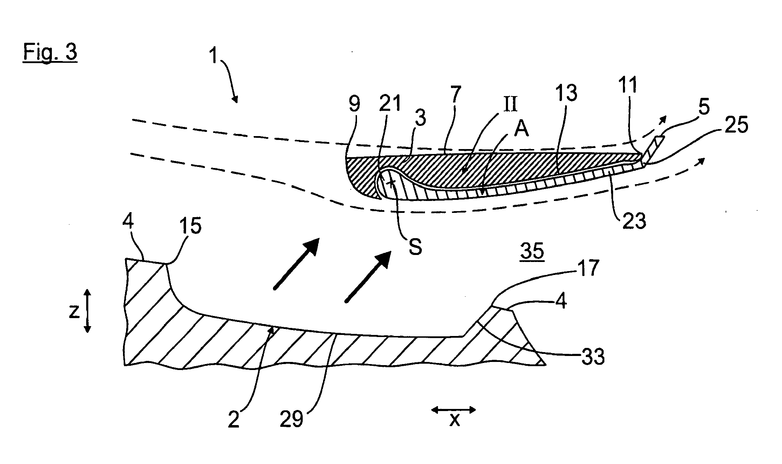

Bei einer weiteren Steigerung der Fahrzeuggeschwindigkeit wird die Verstellmechanik des Heckflügels 3 angesteuert, um diesen in die, in der Fig. 3 gezeigte Betriebsstellung II zu verlagern. Die Verlagerung des Heckflügels 3 in die Betriebsstellung II erfolgt bewegungsgekoppelt mit der Abrisskante 5. In der, in der Fig. 3 gezeigten Betriebsstellung II ergibt sich zwischen dem Heckflügel 3 und der darunterliegenden Fahrzeugkarosserie ein Strömungsspalt 35, der während der Fahrt luftdurchströmt ist. Dadurch wird eine noch weiter gesteigerte Abtriebswirkung auf die Hinterachse erzeugt. Das in der Fig. 3 gezeigte Flügelprofil mit hochgestellter Abrisskante 5 weist somit eine optimale aerodynamische Form auf, um einen sehr guten Abtrieb zu generieren, ohne den CW-Wert des Fahrzeugs wesentlich zu verschlechtern.

In der, in der Fig. 3 gezeigten Betriebsstellung II des Heckflügels 3 ist das plattenförmige Stellelement 23 großflächig in Anlage mit der Unterseite 13 des Heckflügels 3. Im gezeigten Ausführungsbeispiel ist daher die Unterseite 13 des Heckflügels 3 nicht unmittelbar in Strömmungskontakt mit der durchströmenden Luft, sondern lediglich das plattenförmige Stellelement 23, das im Wesentlichen formangepasst an die Heckflügel-Unterseite 13 sich nach hinten erstreckt.

## Patentansprüche

1. Luftleitvorrichtung für ein Kraftfahrzeug mit einem Heckflügel (3), der fahrzeuggeschwindigkeitsabhängig zwischen einer Ablagestellung (I) und einer Betriebsstellung (II) verlagerbar ist und an dem sich heckseitig eine Abrisskante (5) anschließt, wobei die Luftleitvorrichtung ein Stellelement (23) aufweist, mit dem die Abrisskante (5) gegenüber dem Heckflügel (3) zwischen einer eingefahrenen Stellung (E) und einer ausgefahrenen Stellung (A) verstellbar ist, **dadurch gekennzeichnet, dass** die Abrisskante (5) unabhängig davon ein- oder ausfahrbar ist, ob sich der Heckflügel (3) in der Betriebsstellung (II) oder in der Ablagestellung (I) befindet.

2. Luftleitvorrichtung nach Anspruch 1, **dadurch gekennzeichnet, dass** die Abrisskante (5) eine freie Oberkante einer in der Fahrzeugquerrichtung (y) verlaufenden, zwischen der eingefahrenen Stellung (E) und der ausgefahrenen Stellung (A) verlagerbaren Leiste (27) ist.

3. Luftleitvorrichtung nach Anspruch 2, **dadurch gekennzeichnet, dass** die Abrisskanten-Leiste (27) an einem der freien Oberkante (5) gegenüberliegenden Eckbereich (25) in das Stellelement (23) übergeht, und dass insbesondere der Eckbereich (25) in der ausgefahrenen Stellung (A) der Abrisskante (5) die Hinterkante (11) des Heckflügels (3) einfasst.

4. Luftleitvorrichtung nach einem der Ansprüche 1, 2 oder 3, **dadurch gekennzeichnet, dass** das Stellelement (23) der Abrisskante (5) am Heckflügel (3), insbesondere an der Unterseite (13) des Heckflügels (3), verstellbar gelagert ist.

5. Luftleitvorrichtung nach einem der vorhergehenden Ansprüche, **dadurch gekennzeichnet, dass** der Heckflügel (3) in der Ablagestellung (I) in einer karosserieseitigen Aufnahmemulde (2) angeordnet ist, und dass insbesondere in der Ablagestellung (I) die Oberseite (7) des Heckflügels (3) flächenbündig mit der angrenzenden Fahrzeugkontur (4) ist.

6. Luftleitvorrichtung nach Anspruch 5, **dadurch gekennzeichnet, dass** in der Heckflügel-Ablagestellung (I) zwischen der Hinterkante (11) des Heckflügels (3) und der hinteren Randkante (17) der Aufnahmemulde (2) ein Durchtrittsspalt (31) gebildet ist, durch den die Abrisskante (5) führbar ist.

7. Luftleitvorrichtung nach Anspruch 5 oder 6, **dadurch gekennzeichnet, dass** in der Heckflügel-Ablagestellung (I) die Heckflügel-Unterseite (13) und ein Boden (29) der Aufnahmemulde (2) einen freien Bewegungsraum (30) begrenzen, in dem das Stellelement (23) der Abrisskante (5) verstellbar ist.

8. Luftleitvorrichtung nach einem der vorhergehenden Ansprüche, **dadurch gekennzeichnet, dass** das Stellelement (23) plattenförmig ausgebildet ist und insbesondere sich durchgängig in der Fahrzeugquerrichtung (y) entlang dem Heckflügel (3) erstreckt.

9. Luftleitvorrichtung nach einem der vorhergehenden Ansprüche, **dadurch gekennzeichnet, dass** in der ausgefahrenen Abrisskanten-Stellung (A) das Stellelement (23) die Heckflügel-Unterseite (13) überdeckt.

## Claims

1. Air deflector for a motor vehicle comprising a rear spoiler (3) which is displaceable between a stowed position (I) and an operating position (II) depending on the speed of the vehicle and which is adjoined on the rear side by an airflow breakaway edge (5), the air deflector comprising an actuating element (23), by means of which the airflow breakaway edge (5) can be moved relative to the rear spoiler (3) between a retracted position (E) and an extended position (A), **characterised in that** the airflow breakaway edge (5.) can be retracted or extended regardless of whether the rear spoiler (3) is in the operating position (II) or in the stowed position (I).

2. Air deflector according to claim 1, **characterised in that** the airflow breakaway edge (5) is a free top edge of a rail (27) which extends in the transverse direction (y) of the vehicle and is displaceable between the retracted position (E) and the extended position (A).

3. Air deflector according to claim 2, **characterised in that** the airflow breakaway edge rail (27) merges into the actuating element (23) at a corner region (25) opposite the free top edge (5), and **in that**, when the airflow breakaway edge (5) is in the extended position (A), in particular the corner region (25) surrounds the rear edge (11) of the rear spoiler (3).

4. Air deflector according to any of claims 1, 2 or 3, **characterised in that** the actuating element (23) of the airflow breakaway edge (5) is movably mounted on the rear spoiler (3), in particular on the underside (13) of the rear spoiler (3).

5. Air deflector according to any of the preceding claims, **characterised in that**, in the stowed position (I), the rear spoiler (3) is arranged in a receiving cavity (2) on the vehicle-body side, and **in that**, in particular in the stowed position (I), the top side (7) of the rear spoiler (3) is flush with the adjacent vehicle contour (4).

6. Air deflector according to claim 5, **characterised in that**, when the rear spoiler is in the stowed position (I), a through-opening (31) is formed between the rear edge (11) of the rear spoiler (3) and the rear rim edge (17) of the receiving cavity (2), through which through-opening the airflow breakaway edge (5) can be guided.

7. Air deflector according to either claim 5 or claim 6, **characterised in that**, when the rear spoiler is in the stowed position (I), the underside (13) of the rear spoiler and a bottom (29) of the receiving cavity (2) define a free movement space (30), in which the actuating element (23) of the airflow breakaway edge (5) can move.

8. Air deflector according to any of the preceding claims, **characterised in that** the actuating element (23) is plate-shaped and in particular extends continuously in the transverse direction (y) of the vehicle along the rear spoiler (3).

9. Air deflector according to any of the preceding claims, **characterised in that**, when the airflow breakaway edge is in the extended position (A), the actuating element (23) covers the underside (13) of the rear spoiler.

## Revendications

1. Dispositif de guidage d'air pour un véhicule automobile équipé d'un aileron arrière (3), qui peut être déplacé, en fonction de la vitesse du véhicule, entre une position de repos (I) et une position de service (II), et auquel est reliée une arête de décollement (5) au niveau du côté arrière, le dispositif de guidage d'air présentant un élément de positionnement (23), au moyen duquel l'arête de décollement (5) est réglable par rapport à l'aileron arrière (3) entre une position rentrée (E) et une position déployée (A), **caractérisé en ce que** l'arête de décollement (5) peut être rentrée ou déployée, indépendamment du fait que l'aileron arrière (3) se trouve dans la position de service (II) ou dans la position de repos (I).

2. Dispositif de guidage d'air selon la revendication 1, **caractérisé en ce que** l'arête de décollement (5) est une arête supérieure libre d'une moulure (27) positionnée dans le sens transversal du véhicule (y) et déplaçable entre la position rentrée (E) et la position déployée (A).

3. Dispositif de guidage d'air selon la revendication 2, **caractérisé en ce que** la moulure d'arête de décollement (27) passe dans l'élément de positionnement (23) au niveau d'une zone de coin (25) située à l'opposé de l'arête supérieure libre (5), et **en ce que** la zone de coin (25), en particulier, entoure l'arête arrière (11) de l'aileron arrière (3) dans la position déployée (A) de l'arête de décollement (5).

4. Dispositif de guidage d'air selon l'une des revendications 1, 2 ou 3, **caractérisé en ce que** l'élément de positionnement (23) de l'arête de décollement (5) est monté de manière ajustable au niveau de l'aileron arrière (3), en particulier au niveau de la face inférieure (13) de l'aileron arrière (3).

5. Dispositif de guidage d'air selon l'une des revendications précédentes, **caractérisé en ce que** l'aileron arrière (3) est disposé, dans la position de repos (I), dans une cavité de réception (2) du côté de la carrosserie, et **en ce que** la face supérieure (7) de l'aileron arrière (3) affleure le contour adjacent de véhicule (4), en particulier dans la position de repos (I).

6. Dispositif de guidage d'air selon la revendication 5, **caractérisé en ce qu'**une fente de passage (31) est formée, dans la position de repos (I) de l'aileron arrière, entre l'arête arrière (11) de l'aileron arrière (3) et l'arête de bordure arrière (17) de la cavité de réception (2), fente de passage (31) à travers laquelle l'arête de décollement (5) peut être guidée.

7. Dispositif de guidage d'air selon la revendication 5 ou 6, **caractérisé en ce que** dans la position de repos (I) l'aileron arrière, la face inférieure (13) de l'aileron arrière et un fond (29) de la cavité de réception (2) délimitent un espace de mouvement libre (30), au sein duquel l'élément de positionnement (23) de l'arête de décollement (5) peut être réglé.

8. Dispositif de guidage d'air selon l'une des revendications précédentes, **caractérisé en ce que** l'élément de positionnement (23) est conçu en forme de plaque et s'étend en particulier le long de l'aileron arrière (3), dans l'ensemble dans le sens transversal (y) du véhicule.

9. Dispositif de guidage d'air selon l'une des revendications précédentes, **caractérisé en ce que** l'élément de positionnement (23) recouvre la face inférieure (13) de l'aileron arrière, dans la position déployée (A) de l'arête de décollement.
